# EUROPÄISCHE PATENTSCHRIFT

(11) **EP 1 600 319 B1**
(45) Veröffentlichungstag und Bekanntmachung des Hinweises auf die Patenterteilung: **24.11.2010**
(21) Anmeldenummer: 04012525.4
(22) Anmeldetag: 27.05.2004
(51) Int. Cl.: B60K 23/02, F16D 25/12

(54) **Hydraulische Betätigungseinrichtung für eine Kraftfahrzeugkupplung**
Hydraulic actuating device for a vehicle clutch.
Dispositif d'actionnement hydraulique pour embrayage de véhicule.

(43) Veröffentlichungstag der Anmeldung: 30.11.2005
(73) Patentinhaber: ZF Friedrichshafen AG, 88046 Friedrichshafen (DE)
(72) Erfinder: Tulaczko, Boleslaw, 97453 Schonungen (DE)

(56) Entgegenhaltungen:
- DE-A- 19 650 734
- DE-C- 19 500 908
- PATENT ABSTRACTS OF JAPAN Bd. 0070, Nr. 71 (M-202), 24. März 1983 (1983-03-24) & JP 58 000424 A (TOYO KOGYO KK), 5. Januar 1983 (1983-01-05)

## Beschreibung

Die Erfindung betrifft eine hydraulische Betätigungseinrichtung für eine Kraftfahrzeugkupplung gemäß dem Oberbegriff des Patentanspruchs 1.

Hydraulische Kupplungsbetätigungssysteme an Kraftfahrzeugen weisen die unerwünschte Eigenschaft auf, dass von der periodisch zündenden Brennkraftmaschine ausgelöste Axialschwingungen über die Reibungskupplung und deren Membranfeder auf das Kupplungsausrücklager und die damit verbundenen Ausrückeinrichtungen übertragen werden. Diese Axialschwingungen setzen sich fort in einem Hydraulikdruckraum, der durch einen Geber- und einen Nehmerzylinder, sowie einen diese verbindenden Hydraulikkanal begrenzt wird und können ein unangenehmes Kribbeln im Fuß eines Fahrzeugführers bei der Berührung des Kupplungspedals auslösen.

Die Druckpulsationen können einerseits bereits durch den Einsatz einer in Grenzen elastischen Druckleitung, beispielsweise aus einem Stahl-Gummi-Verbund, gedämpft werden. In Anwendungsfällen, wo diese Massnahme allein ungenügend ist, können in dem hydraulischen Betätigungssystem zusätzliche, als sogenannte Kribbelfilter ausgeführte hydraulische Dämpfungsglieder integriert werden. Ausserdem werden Stahl-Gummi-Leitungen zunehmend durch einfacher zu fertigende und kostengünstigere, vollständig aus einem Kunststoff gefertigte Druckleitungen ersetzt, welche bei einer Druckbelastung infolge einer Kupplungsbetätigung eine gegenüber dem vorgenannten Leitungstyp geringere Elastizität und damit eine geringere Volumenaufnahme aufweisen. In diesen Fällen ist der Einsatz eines hydraulischen Dämpfungsgliedes besonders wünschenswert.

Ein Dämpfungsglied kann an verschiedenen Positionen in den Druckraum einer hydraulischen Betätigungseinrichtung positioniert werden. So offenbart beispielsweise die DE 100 08 479 A1 eine Vielzahl von verschiedenartigsten Dämpfungsgliedern, welche beispielsweise gemäß der schematischen Darstellung der Figur 16 entweder als Bauverbund mit dem Geber- oder dem Nehmerzylinder ausgeführt oder separat innerhalb der Hydraulikleitung angeordnet sind. Bei dieser Variante weist das dort dargestellte Dämpfungsglied eine Einlass- und eine Auslassöffnung mit Fluid-Kupplungselementen auf, welche zur Verbindung mit zwei Teilstücken einer Hydraulikleitung, die ebenfalls über entsprechende Kupplungselemente verfügt, vorgesehen sind. Eine hydraulische Betätigungseinrichtung gemäß der beschriebenen Ausführung weist somit insgesamt vier Kupplungsbereiche mit acht Kupplungselementen auf.

Allgemein stellen Fluid-Kupplungen in einem Hydraulikhochdrucksystem kritische Bereiche dar, da diese insbesondere mit steigender Betriebszeit eine Quelle für Systemausfälle bilden, wobei das in der hydraulischen Betätigungseinrichtung befindliche Fluid aus dieser austreten kann und die Betriebssicherheit des Fahrzeuges stark gefährdet ist. Die in der DE 100 08 479 A1 dargestellte Anordnung eines Dämpfungsgliedes in Verbindung mit zwei Hydraulikdruckleitungen ist diesbezüglich äußerst nachteilig und verursacht ebenso hohe Fertigungs- und Montagekosten.

Das US-Patent 6,430,928 B1 beschreibt in deren Figur 11 ebenfalls ein, an zwei Hydraulikleitungen angeschlossenes Dämpfungsglied. Das Dämpfungsglied selbst weist jedoch im Gegensatz zu dem der DE 100 08 479 A1 nur einen einzigen Anschlussbereich zum Anschluss an die Hydraulikleitungen auf, weicher aus einem T-Stück gebildet wird, in dessen sich gegenüberliegende Anschlussöffnungen die Enden der mit dem Geber- bzw. Nehmerzylinder verbundenen Fluidleitungen eingesteckt und unlösbar verbunden sind. Der verbleibende dritte Anschlussbereich des T-Stückes ist mittels eines Gewindes mit einem Anschlussbereich des Dämpfungsgliedes verschraubt. Auf diese Weise wird die Anzahl der lösbaren Fluid-Verbindungen um zwei, also auf sechs, reduziert, wodurch die Betriebssicherheit erhöht wird. Andererseits kann jedoch das Einschraubgewinde ebenfalls eine Quelle für Undichtigkeiten des hydraulischen Systems darstellen. Die Bereitstellung eines separaten T-Anschlusselementes und dessen Montage stellen auch in diesem Fall nicht unerhebliche Kostenfaktoren dar.

Ein weiteres Dämpfungsglied für eine hydraulische Kupplungsbetätigseinrichtung ist mit der WO 2004/015290 A1 bekannt geworden, dessen Gehäuse eine sich zwischen zwei Steckkupplungselementen erstreckende Hydraulikleitung und einen sich von einem Mittenbereich der erstgenannten seitlich abgezweigten Fluidanschluss für eine Druckkammer eines als Membranschwingungsdämpfers ausgebildeten Dämpfungsgliedes aufweist. Das Dämpfungsglied selbst ist bereits sehr kompakt ausgebildet, jedoch muss auch hier zur Herstellung einer Fluidverbindung zu einem Geber- und einem Nehmerzylinder mindestens eine Hydraulikleitung dazwischengeschaltet werden.

Die JP-A-58 000 424 offenbart eine hydraulische Betätigungseinrichtung mit einem Dämpfungsglied, welches mit einem Leitungsabschnitt mit einem Geberzylinder und mit einem weiteren Leitungsabschnitt mit einem Nehmerzylinder verbunden ist. Zu diesem Zweck sind an den beiden in das Dämpfungsglied mündenden Leitungsabschnitten und an dem Dämpfungsglied entsprechende Hydraulikkupplungselemente vorgesehen.

Noch weiter wird in der gattungsbildenden DE 196 50 734 A1 eine hydraulische Betätigungseinrichtung mit einer Anschlussgarnitur offenbart, welches ein Dämpfungsglied mit einem durch dieses hindurchgeführten Fluidkanal und eine mit dem Dämpfungsglied unlösbar verbundene Schlauchleitung umfasst. Die Schlauchleitung ist dabei an einer Seite auf einem Rohransatz des Dämpfungsgliedes aufgeschoben und dort mittels einer Quetschhülse gesichert. Das Dämpfungsglied weist an der anderen Seite ein Anschlußteil zur Herstellung einer lösbaren Steckverbindung mit einem Geber- oder Nehmerzylinder der Betätigungseinrichtung auf.

Von dem genannten Stand der Technik ausgehend, ist es eine Aufgabe der vorliegenden Erfindung, eine konstruktiv einfache hydraulische Betätigungseinrichtung für eine Kraftfahrzeugkupplung mit einem einteilig mit der Hydraulikleitung ausgeführten Dämpfungsglied zur Abschwächung von Druckschwingungen darzustellen. Als eine weitere Aufgabe der Erfindung soll das Dämpfungsglied zudem einfach an einer innerhalb des hydraulischen Systems gewünschten Position integriert werden können.

Die Erfindung löst die vorstehend genannten Aufgaben durch eine gattungsgemäße hydraulischen Betätigungseinrichtung für eine Kraftfahrzeugkupplung, die zusätzlich die Merkmale des Patentanspruchs 1 aufweist.

Somit stellt die vorliegende Erfindung eine hydraulische Betätigungseinrichtung für eine Kraftfahrzeugkupplung bereit, welche einen Geberzylinder mit einem Kolben und einen mit diesem über eine Hydraulikleitung verbundenen Nehmerzylinder mit einem Kolben umfasst, wobei die vorgenannten Elemente einen Druckraum bilden, in welchem ein einteilig mit der Hydraulikleitung ausgeführtes Dämpfungsglied zur Abschwächung von Druckschwingungen angeordnet ist. Die Betätigungseinrichtung zeichnet sich gegenüber dem Stand der Technik dadurch aus, dass die Hydraulikleitung am Dämpfungsglied durchgehend ausgebildet ist und sich durch das Dämpfungsglied hindurch erstreckt und über wenigstens eine in deren Mantelbereich angeordnete Öffnung mit dem Dämpfungsglied in Fluidverbindung steht.

Vorteilhafte Weiterbildungen und Ausgestaltungen der Erfindung sind in den Unteransprüchen aufgeführt.

Die Erfindung wird anhand der nachfolgenden Beschreibung und der Figuren beispielhaft erläutert. Es zeigen:
- Fig. 1: eine schematische Darstellung einer hydraulischen Betätigungseinrichtung für eine Kraftfahrzeugkupplung mit einem darin angeordneten Dämpfungsglied,
- Fig.2a,b: Schnittdarstellungen von einteilig mit einer Hydraulikleitung ausgeführten Dämpfungsgliedern, wobei Fig. 2b erfinderische Konzept zeigt,
- Fig. 3: ein Dämpfungsglied mit zwei parallel zueinander angeordneten Membranen,
- Fig. 4: ein Dämpfungsglied, bei welchem die Membran durch eine Tellerfeder abgestützt wird,
- Fig. 5: eine vergrößerte perspektivische Darstellung eines an dem Dämpfungsglied der Fig. 2 angeordneten Fluid-Leitelementes.

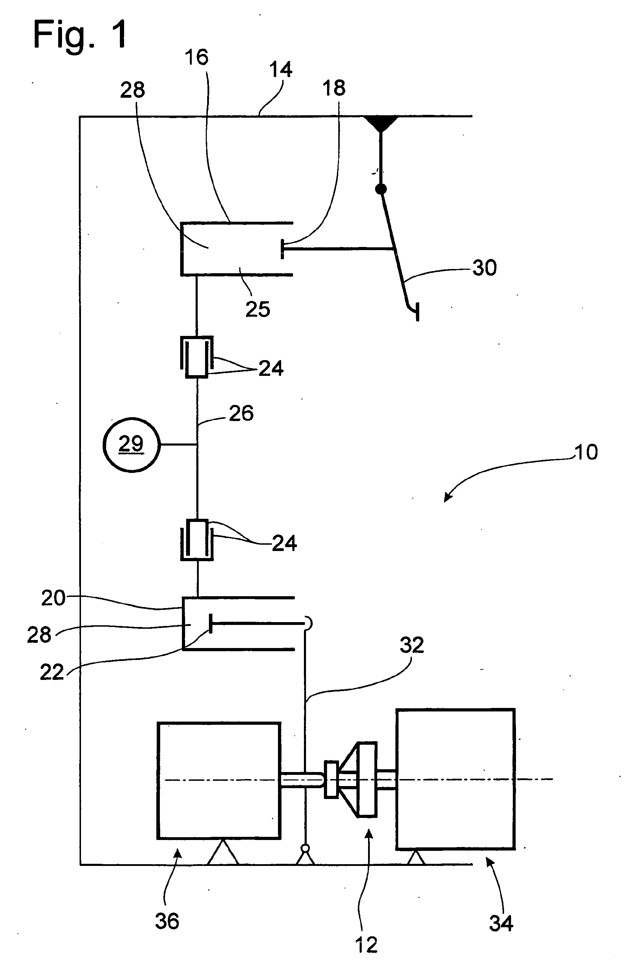

Gemäß Fig. 1 wird schematisch eine hydraulische Betätigungseinrichtung 10 zum Betätigen einer Kraftfahrzeugkupplung 12 gezeigt, welche an einem Chassis 14 eines Kraftfahrzeugs angeordnet ist und wobei ein Geberzylinder 16 mit einem Kolben 18 und ein Nehmerzylinder 20 mit einem Kolben 22 angeordnet sind, die miteinander über Steckkupplungen bzw. Hydraulikkupplungselemente 24 mit einer mit einem Fluid 25 befüllten Hydraulikleitung 26 verbunden sind und einen gemeinsamen Druckraum 28 ausbilden. Der Kolben 18 des Geberzylinders 16 kann durch ein Pedal 30 betätigt werden, woraufhin sich der Kolben 22 des Nehmerzylinders 20 verschiebt und eine Kupplungsgabel 32 zum Ausrücken der Kupplung 12 an einem als Verbrennungsmotor 34 ausgebildeten Antriebsaggregat steuert. Die Kupplung 12 ist eingangsseitig mit der Abtriebswelle des Verbrennungsmotors 34 und ausgangsseitig mit einem Schaltgetriebe 36 verbunden. Innerhalb der Hydraulikleitung 26 ist ein Dämpfungsglied 29 zur Dämpfung von Druckpulsationen vorgesehen, welches über einen Verbindungskanal 31 angeschlossen ist, der von einem Fluid-Hauptkanal 27 abzweigt. Das Dämpfungsglied 29 kann dabei einteilig, das heißt integral mit der Hydraulikleitung ausgeführt sein oder alternativ auch über Hydraulik-Kupplungselemente 24 mit dieser verbunden werden.

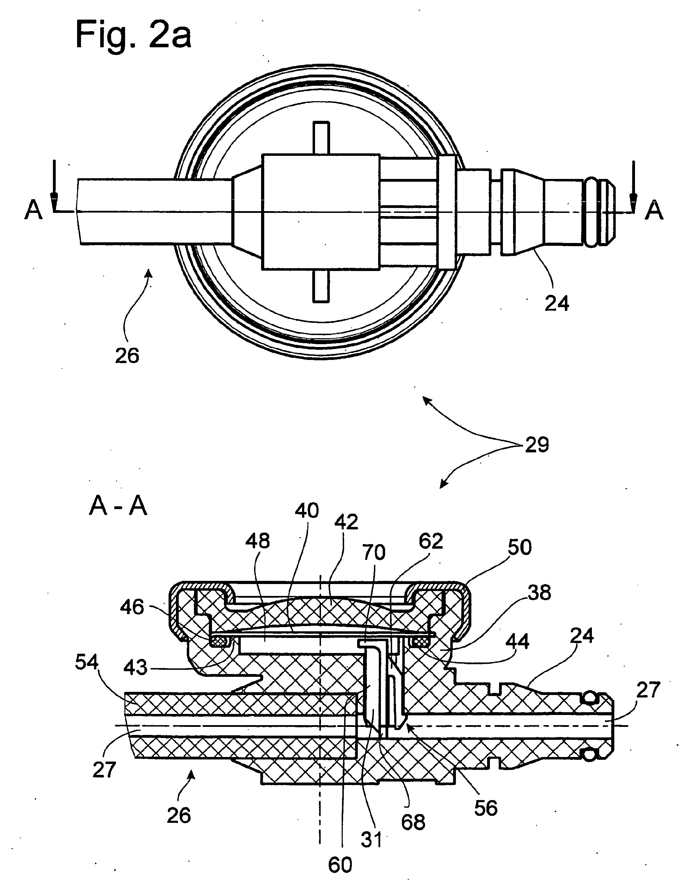

Fig. 2a zeigt ein als Membranschwinger ausgebildetes Dämpfungsglied 29, welches ein zylindrisches Gehäuse 38 mit einer darin stirnseitig angeordneten kreisförmigen Stahlblech-Membran 40 umfasst, die bei Druckpulsationen des Hydraulikfluids Schwingungen ausführen kann. Bei einem plötzlichen Druckanstieg kann sich die Membran kurzzeitig auswölben und dadurch ein zusätzliches Volumen bereitstellen, wodurch eine Druckpulsation gemildert werden kann. Die Membran 40 wird von einem Gehäusedeckel 42 gegen einen Ringsteg 43 gepresst und dichtet mit einer in einer Nut 44 liegenden O-Ringdichtung 46 eine Fluiddruckkammer 48 gegenüber der Atmosphäre ab. Der Deckel 42 wird von einer Umbördelung 50 an dessen Sitz gehalten. Die Innenfläche 52 des Deckels 42 ist konkav geformt, so dass sich die Membran 40 bei Erreichen eines maximal zulässigen Fluiddruckes an diese anschmiegen kann und eine Überdehung der Membran 40 und ggf. ein Bersten des Dämpfungsgliedes 29 vermieden werden kann.

Zur Herstellung einer Fluidverbindung zwischen der Hydraulikleitung 26 und dem Dämpfungsglied 29 ist ein freies Ende einer vorzugsweise aus dem Kunststoff PA 12 hergestellten Hydraulikleitung 26 mit einem an dieses Ende angespritzten Gehäuse 38 versehen und somit fluiddicht mit diesem verbunden. Das Gehäuse 38 besteht ebenfalls aus PA 12, jedoch ist dieses zusätzlich strukturell mit einem Faserwerkstoff, vorzugsweise Glasfasern verstärkt. Wesentlich ist, dass für die Hydraulikleitung 26 und das Gehäuse 38 eine geeignete, spritzbare Kunststoffpaarung Verwendung findet. Das andere, nicht dargestellte Ende der Hydraulikleitung 26 ist mit einem ersten Hydraulikkupplungselement 24 zur Verbindung mit dem Nehmerzylinder 20 versehen. Das Gehäuse 38 des Dämpfungsgliedes 29 ist einstückig mit einem zweiten Kupplungselement 24 zur Verbindung mit dem Geberzylinder 16 ausgebildet. Die Kombination des Gehäuses 38 mit einem Kupplungselement 24 erweist sich fertigungstechnisch als vorteilhaft, da diese Teile vorzugsweise auf der gleichen Werkstoffbasis beruhen und somit in einem Arbeitsgang hergestellt werden können.

Wie in Fig. 2a zu erkennen, verläuft der Fluid-Hauptkanal 27 von links kommend zunächst innerhalb der Hydraulikleitung 26 und geht dann in das Gehäuse 38 über, um anschließend über den Kupplungsstecker 24 auszutreten. Innerhalb des Gehäuses 38 zweigt vom Hauptkanal 27 ein Verbindungskanal 31 ab, der mit der Druckkammer 48 in Fluidverbindung steht und Druckpulsationen in diese einleiten kann. Der Verbindungskanal 31 ist so angeordnet, dass dieser in den Randbereich der Druckkammer 48 mündet, so dass bei einem vertikalen Einbau des Dämpfungsgliedes 29, d.h. bei einem vertikal ausgerichteten Hauptkanal 27 und nach oben gerichtetem Kupplungselement 24 auf diese Weise im Dämpfungsglied 29 befindliche Luftblasen leicht aus diesem entweichen können und das Betätigungssystem 10 vollständig entlüftet werden kann.

Alternativ zu dem Ausführungsbeispiel der Fig. 2a kann der Verbindungskanal 27 auch innerhalb der Hydraulikleitung 26 seitlich in deren Mantelbereich 54 oder auch in das Kupplungselement 24 münden.

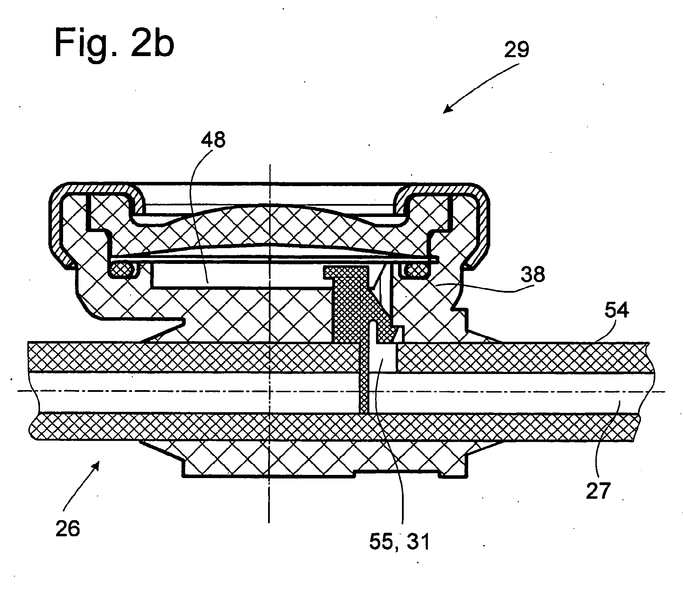

Das Dämpfungsglied 29 kann gemäß Fig. 2b auch an einer bereits beidseitig mit Kupplungselementen 24 konfektionierten Hydraulikleitung 26 an einer beliebigen, vorgebbaren Position angeordnet werden. Dazu wird der Mantel 54 der Hydraulikleitung 26 an dieser Position mit einer Öffnung 55 versehen und das Gehäuse 38 des Dämpfungsgliedes 29 an die Hydraulikleitung 26 angespritzt, wobei durch die geschaffene Mantelöffnung die Fluidverbindung, d.h. der Verbindungskanal 31 zu der Druckkammer 48 erzeugt wird. Bei dieser Ausführung ist somit die Hydraulikleitung 26 im Bereich des Dämpfungsgliedes 29 durchgehend ausgebildet.

Als weitere Möglichkeit zur Darstellung eines mit einer Hydraulikleitung 26 integrierten Dämpfungsgliedes 29 bietet es sich an, in einem ersten Schritt eine Hydraulikleitung 26 und ein separates Dämpfungsglied 29 herzustellen und beide Teile 26, 29 in einem zweiten Schritt fluiddicht miteinander zu verbinden, indem die Dichtungsstellen beispielsweise durch Einspritzen von Kunststoff oder durch ein Vulkanisieren eines Gummimaterials oder einer ähnlichen Dichtmasse erzeugt werden können.

Die Funktion des Dämpfungselementes 29 kann durch ein zumindest im Anschlußbereich des Verbindungskanals 31 an dem Hauptkanal 27 angeordnetes Fluid-Leitelement 56 erheblich verbessert werden, in dem dieses die Strömung im Fluid-Hauptkanal 27 beeinflusst und eine im Wesentlichen zum Dämpfungsglied 29 gerichtete Fluidströmung erzeugt. Das in Fig. 2a,b am Dämpfungsglied 29 dargestellte Fluid-Leitelement 56 dehnt sich hauptsächlich innerhalb des Verbindungskanals 31 aus und erstreckt sich beidseitig sowohl in den Hauptkanal 27 als auch in die Druckkammer 48 hinein.

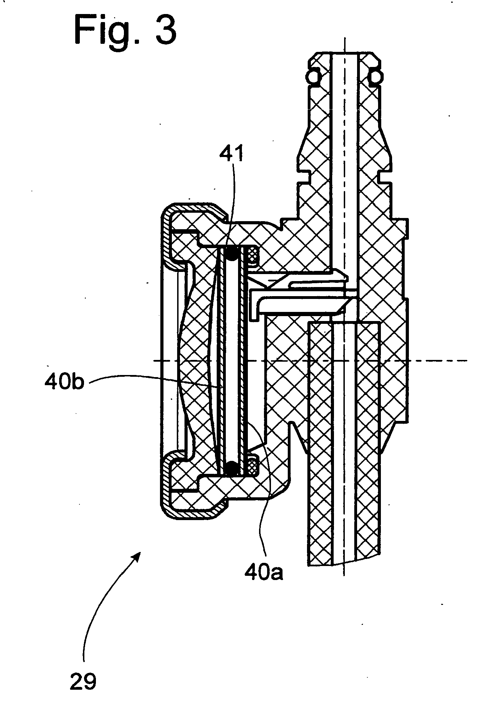

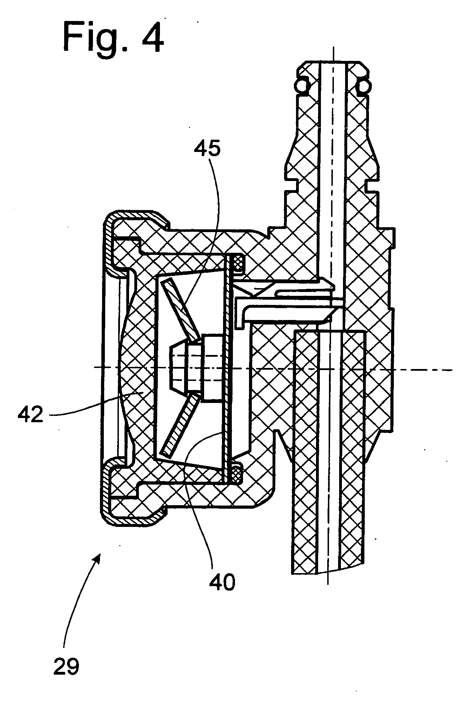

Anstelle von nur einer Membran 40 können gemäß Fig. 3 auch zwei oder mehrere, durch Distanzhalter 41 beabstandete Membranen 40a, 40b mit gleichen oder unterschiedlichen Steifigkeiten in der Druckkammer 48 plaziert werden, um damit das Dämpfungsverhalten gezielt an verschiedene Antriebsstrangkonfigurationen und/oder Druckbereiche optimal anzupassen. Weiterhin können, wie dieses Fig. 4 zeigt, auf der, der Druckkammer 48 abgewandten Seite, d.h. zwischen der Membran 40 und dem Deckel 42 auch Federmittel, bspw. in Form einer Tellerfeder 45 zur Erzeugung einer vom Ausmaß der Druckpulsationen abghängigen Gegenkraft und/oder zur Begrenzung der Auslenkungdes Membranschwingers 29 angeordnet werden. Die Tellerfeder 45 ist an einem an der Membran 40 angeordneten Verbindungselementes 47 verschnappt und weist zu diesem und/oder zu dem Deckel 42 einen Spielzwischenraum auf, um eine Verformung der Tellerfeder 45 aufzunehmen.

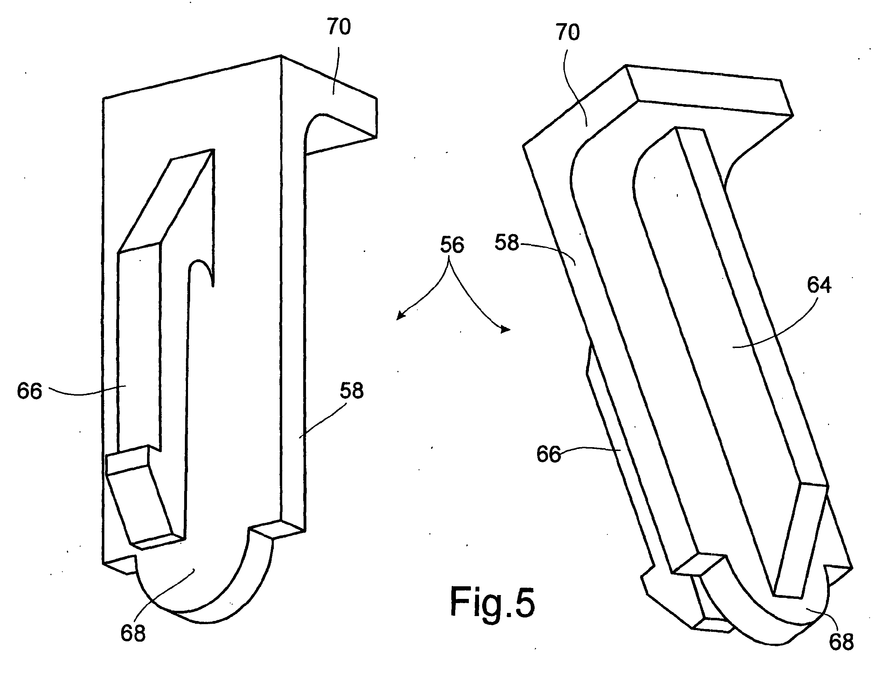

Fig. 5 zeigt ein separates, als Kunststoffspritzgussteil gefertigtes Fluid-Leitelement 56, welches als Basis eine L-förmigen Trennwand 58 aufweist, die den Verbindungskanal 31 je nach Strömungsrichtung in einen Einlass- 60 und einen Auslasskanal 62 unterteilt. Zur Fixierung des Fluid-Leitelementes 56 dienen zwei beidseitig von der Trennwand 58 abstehende, als Distanzhalter dienende Stege 64, 66, von denen einer als federnder Rasthaken 66 zur Herstellung einer Rastverbindung mit dem Verbindungs- 31 und dem Hauptkanal 27 ausgebildet ist. Ein in den Hauptkanal 27 hineinragender Endabschnitt 68 der Trennwand 58 ist als Halbkreisscheibe ausgebildet und liegt an der Innenwandung des Hauptkanals 27 an, um in diesem Bereich den ansonsten durchgehenden bzw. direkten Fluid-Hauptkanal 27 zwischen dem Geber- 16 und dem Nehmerzylinder 20 im Wesentlichen zu unterbrechen. Die Trennwand 58 ragt teilweise in die Druckkammer 48 hinein und weist als oberen Abschluss eine etwa parallel zu der Membran 40 ausgerichtete Abwinkelung 70 auf, durch welche das einströmende Fluid vorzugsweise lateral in der Druckkammer 48 geführt und dabei verwirbelt wird. Um die Verweildauer des Fluids in der Druckkammer 48 zu erhöhen, kann das Fluid-Leitelement 56 weitere Trennwand- bzw. Leitanordnungen aufweisen, bspw. einen von dem Distanzhalter 64 senkrecht abstehenden Steg o.ä.

Das beschriebene Fluid-Leitelement 56 lenkt den beispielsweise vom Nehmerzylinder 20 eintreffenden Fluidstrom im Hauptkanal 27 zur Erzeugung einer in das Dämpfungsglied 29 gerichteten Fluidströmung ab. Diese Strömung wird von der im Verbindungskanal 31 angeordneten Trennwand 58 von einer aus dem Dämpfungsglied 29 heraus in Richtung des Geberzylinders 16 fließenden Strömung ferngehalten und schließlich von dem in der Druckkammer 48 angeordneten Bereich auf einen Strömungsweg gezwungen, dessen Länge um ein Mehrfaches größer ist als der gegenseitige Abstand von Einlass- 60 und Auslasskanal 62, um die Druckkammer 48 über den Auslasskanal 62 wieder zu verlassen.

Die beschriebenen Strömungsbeeinflussungs- Leit- und Trennmittel können alternativ auch einzeln, d.h. separat an der Hydraulikleitung, dem Verbindungskanal und der Druckkammer ausgeführt sein.

Es soll schließlich erwähnt werden, dass das bspw. in Fig. 2a,b dargestellte Dämpfungsglied 29 mit zwei oder mehreren Druckkammern 48, die jeweils mit einem Verbindungskanal 31 an dem Hauptkanal 27 angeordnet sind, ausgebildet werden kann. Die einzelnen Druckkammern 48 können im Hauptkanal parallel angeordnet sein, was bedeutet, dass alle Druckkammern 48 gleichrangig und gleichzeitig von einer sich ausbreitenden Druckpulsation beaufschlagt werden. Andererseits ist auch eine serielle Anordnung von Druckkammern 48 denkbar, welche bspw. durch in Strömungsrichtung am Hauptkanal versetzt angeordnete Verbindungskanäle 31 tung am Hauptkanal versetzt angeordnete Verbindungskanäle 31 realisiert werden kann. In diesem Fall durchläuft eine Druckpulsation die einzelnen Druckkammern 48 nacheinander, wobei diese auf deren Strömungsweg zunehmend geschwächt wird.

### Bezugszeichenliste

- 10: hydraul. Betätigungseinrichtung
- 12: Kraftfahrtzeugkupplung
- 14: Chassis
- 16: Geberzylinder
- 18: Kolben
- 20: Nehmerzylinder
- 22: Kolben
- 24: Steckkupplung
- 25: Hydraulikfluid
- 26: Hydraulikleitung
- 27: Fluid-Hauptkanal
- 28: Druckraum
- 29: Dämpfungsglied
- 30: Pedal
- 31: Verbindungskanal
- 32: Kupplungsgabel
- 34: Verbrennungsmotor
- 36: Schaltgetriebe
- 38: Gehäuse
- 40: Membran
- 41: Distanzhalter
- 42: Gehäusedeckel
- 43: Ringsteg
- 44: Nut
- 45: Tellerfeder
- 46: Dichtung
- 47: Verbindungselement
- 48: Fluiddruckkammer
- 50: Umbördelung
- 52: Innenfläche
- 54: Mantelbereich
- 55: Öffnung
- 56: Fluid-Leitelement
- 58: L-förmige Trennwand
- 60: Einlasskanal
- 62: Auslasskanal
- 64: Steg
- 66: Rasthaken
- 68: Endabschnitt
- 70: Abwinkelung

## Patentansprüche

1. Hydraulische Betätigungseinrichtung (10) für eine Kraftfahrzeugkupplung (12), welche einen Geberzylinder (16) mit einem Kolben (18) und einen mit diesem über eine Hydraulikleitung (26) verbundenen Nehmerzylinder (20) mit einem Kolben (22) umfasst, wobei die vorgenannten Elemente einen Druckraum (28) bilden, in welchem ein einteilig mit der Hydraulikleitung (26) ausgeführtes Dämpfungsglied (29) zur Abschwächung von Druckschwingungen angeordnet ist,
**dadurch gekennzeichnet,**
**dass** die Hydraulikleitung (26) am Dämpfungsglied (29) durchgehend ausgebildet ist und sich durch das Dämpfungsglied (29) hindurch erstreckt und über wenigstens eine in deren Mantelbereich (54) angeordnete Öffnung mit dem Dämpfungsglied (29) in Fluidverbindung steht.

2. Hydraulische Betätigungseinrichtung nach Anspruch 1,
**dadurch gekennzeichnet,**
**dass** ein Gehäuse (38) des Dämpfungsgliedes (29) an der Hydraulikleitung (26) als Anspritzteil aus einem Kunststoff ausgeführt ist.

3. Hydraulische Betätigungseinrichtung nach Anspruch 1 oder 2,
**dadurch gekennzeichnet,**
**dass** das Gehäuse (38) des Dämpfungsgliedes (29) als separates Teil zur Anordnung an der Hydraulikleitung (26) ausgeführt ist.

4. Hydraulische Betätigungseinrichtung nach einem der vorhergehenden Ansprüche,
**dadurch gekennzeichnet,**
**dass** die Hydraulikleitung (26) aus einem Kunststoff ausgeführt ist.

5. Hydraulische Betätigungseinrichtung nach einem der vorhergehenden Ansprüche,
**dadurch gekennzeichnet,**
**dass** das Gehäuse (38) des Dämpfungsgliedes (29) und ein Hydraulik-Kupplungselement (24) im Wesentlichen aus demselben, zusätzlich mit Fasern verstärkten Kunststoff ausgeführt sind.

6. Hydraulische Betätigungseinrichtung nach einem der vorhergehenden Ansprüche,
**dadurch gekennzeichnet,**
**dass** von einem zwischen dem Geber- (16) und dem Nehmerzylinder (20) verlaufenden Fluid-Hauptkanal (27) ein Verbindungskanal (31) abzweigt, der in den Randbereich einer Fluid-Druckkammer (48) des Dämpfungsgliedes (29) mündet.

7. Hydraulische Betätigungseinrichtung nach Anspruch 6,
**dadurch gekennzeichnet,**
**dass** im Anschlußbereich des Verbindungskanals (31) an dem Fluid-Hauptkanal (27) Strömungsbeeinflussungsmittel (68) zur Erzeugung einer im Wesentlichen zum Dämpfungsglied (29) gerichteten Fluidströmung ausgebildet sind.

## Claims

1. Hydraulic actuating device (10) for a motor vehicle clutch (12), which hydraulic actuating device has a master cylinder (16) with a piston (18) and has a slave cylinder (20) which is connected to said master cylinder via a hydraulic line (26) and which has a piston (22), with said elements forming a pressure space (28) in which is arranged a damping element (29), which is formed in one piece with the hydraulic line (26), for attenuating pressure oscillations,
**characterized**
**in that** the hydraulic line (26) is formed so as to be continuous at the damping element (29) and extends through the damping element (29), and said hydraulic line (26) is fluidically connected via at least one opening arranged in its casing region (54) to the damping element (29).

2. Hydraulic actuating device according to Claim 1,
**characterized**
**in that** a housing (38) of the damping element (29) is formed on the hydraulic line (26) as a moulded- on part composed of a plastic.

3. Hydraulic actuating device according to Claim 1 or 2,
**characterized**
**in that** the housing (38) of the damping element (29) is formed as a separate part for arranging on the hydraulic line (26).

4. Hydraulic actuating device according to one of the preceding claims,
**characterized**
**in that** the hydraulic line (26) is formed from a plastic.

5. Hydraulic actuating device according to one of the preceding claims,
**characterized**
**in that** the housing (38) of the damping element (29) and a hydraulic coupling element (24) are formed substantially from the same, additionally fibre-reinforced plastic.

6. Hydraulic actuating device according to one of the preceding claims,
**characterized**
**in that** a connecting duct (31) branches off from a main fluid duct (27) running between the master cylinder (16) and the slave cylinder (20), which connecting duct opens out in the edge region of a fluid pressure chamber (48) of the damping element (29).

7. Hydraulic actuating device according to Claim 6,
**characterized**
**in that** flow-influencing means (68) for generating a fluid flow directed substantially towards the damping element (29) are formed in the region in which the connecting duct (31) connects to the main fluid duct (27).

## Revendications

1. Dispositif d'actionnement hydraulique (10) pour un embrayage de véhicule (12), qui comprend un maître-cylindre (16) avec un piston (18) et un cylindre récepteur (20) connecté à celui-ci par le biais d'une conduite hydraulique (26), avec un piston (22), lesdits éléments formant un espace de pression (28) dans lequel un organe d'amortissement (29) réalisé d'une seule pièce avec la conduite hydraulique (26) est disposé en vue d'amortir les oscillations de pression,
**caractérisé en ce que**
la conduite hydraulique (26) est réalisée de manière continue sur l'organe d'amortissement (29) et s'étend à travers l'organe d'amortissement (29) et est en liaison fluidique par le biais d'au moins une ouverture pratiquée dans sa région d'enveloppe (54) avec l'organe d'amortissement (29).

2. Dispositif d'actionnement hydraulique selon la revendication 1,
**caractérisé en ce**
**qu'**un boîtier (38) de l'organe d'amortissement (29) est réalisé sur la conduite hydraulique (26) sous forme de pièce moulée par injection en plastique.

3. Dispositif d'actionnement hydraulique selon la revendication 1 ou 2,
**caractérisé en ce que**
le boîtier (38) de l'organe d'amortissement (29) est réalisé sous forme de pièce séparée à disposer sur la conduite hydraulique (26).

4. Dispositif d'actionnement hydraulique selon l'une quelconque des revendications précédentes,
**caractérisé en ce que**
la conduite hydraulique (26) est réalisée en plastique.

5. Dispositif d'actionnement hydraulique selon l'une quelconque des revendications précédentes,
**caractérisé en ce que**
le boîtier (38) de l'organe d'amortissement (29) et un élément d'accouplement hydraulique (24) sont réalisés essentiellement en le même plastique renforcé en outre par des fibres.

6. Dispositif d'actionnement hydraulique selon l'une quelconque des revendications précédentes,
**caractérisé en ce**
**qu'**un canal de liaison (31) part d'un canal principal de fluide (27) s'étendant entre le maître-cylindre (16) et le cylindre récepteur (20), et débouche dans la région de bord d'une chambre de pression de fluide (48) de l'organe d'amortissement (29).

7. Dispositif d'actionnement hydraulique selon la revendication 6,
**caractérisé en ce que**
des moyens pour influencer l'écoulement (68) pour produire un écoulement de fluide orienté essentiellement vers l'organe d'amortissement (29) sont réalisés dans la région de raccordement du canal de liaison (31) au canal principal de fluide (27).
